# FASCICULE DE BREVET EUROPEEN

(11) **EP 0 879 983 B1**
(45) Date de publication et mention de la délivrance du brevet: **05.03.2003**
(21) Numéro de dépôt: 98401231.0
(22) Date de dépôt: 22.05.1998
(51) Int. Cl.: F16L 33/08

(54) **Bande pour un collier de serrage et collier de serrage**
Band für eine Befestigungsschelle und Befestigungsschelle
Strap for a hose clamp and hose clamp

(30) Priorité: 21.05.1997 FR 9706166
(43) Date de publication de la demande: 25.11.1998
(73) Titulaire: Serflex, 94500 Champigny-sur-Marne (FR)
(72) Inventeur: Busson, Jean-Pierre, 93160 Noisy-le-Grand (FR); Le Noan, Jacques, 78700 Conflans-Ste-Honorine (FR)
(74) Mandataire: Intès, Didier Gérard André

(56) Documents cités:
- FR-A- 1 518 283
- US-A- 3 769 665
- US-A- 3 981 053

## Description

La présente invention concerne une bande métallique pour un collier de serrage à vis. Ces colliers, très répandus dans l'industrie, comprennent une portion de bande de métal enroulée sur elle-même, une vis de serrage et un support pour cette vis solidaire d'une première extrémité de la portion de bande, cette dernière présentant des surfaces d'appui, situées au moins au voisinage de sa deuxième extrémité et aptes à coopérer avec la vis pour serrer le collier. La longueur de la portion de bande nécessaire pour former le collier dépend du diamètre de l'objet à serrer.

Le brevet US 3 981 053 divulgue une bande de métal qui présente des fentes de serrage sensiblement transversales qui sont destinées à servir de surfaces d'appui pour les filets de la vis, ainsi que des encoches, disposées par paires de deux encoches régulièrement réparties sur les bords longitudinaux de la bande, les encoches de chaque paire étant situées de part et d'autre d'une fente de serrage et permettant ainsi la rupture manuelle de la bande pour former des portions de bande de la longueur souhaitée.

En outre, la bande présente des ouvertures en forme de serrure qui sont disposées au voisinage de chaque paire d'encoches. Ces ouvertures constituent des premiers moyens d'accrochage qui permettent de fixer chaque portion de bande obtenue par rupture de la bande à un support pour une vis de serrage, ce support étant équipé à cet effet de deuxièmes moyens d'accrochage.

La bande que divulgue ce document présente l'avantage de pouvoir être rompue sans aucun outil à la longueur voulue et de permettre un assemblage relativement aisé d'un support de vis avec une portion de bande ainsi obtenue.

La bande et le collier que divulgue ce document présentent deux inconvénients.

Le premier a trait à la fabrication de la bande. En effet, les encoches qui permettent la rupture manuelle de la bande sont obtenues, par exemple par poinçonnage, en enlevant une très faible quantité de matière sur les bords de la bande, en des endroits régulièrement répartis. Il en résulte des déchets de très faibles dimensions qu'il est difficile d'éliminer. En particulier ces déchets, du fait de leur petite taille, risquent de rester coincés dans les outils qui servent à usiner la bande et risquent même de remonter à l'intérieur de ces outils pour finir par les bloquer ou par les endommager. Il faut également noter que ces encoches ne constituent des zones de faiblesse aptes à permettre la rupture manuelle de la bande que dans la mesure où les encoches de chaque paire sont associées à une fente de serrage de la bande de part et d'autre de laquelle elles sont placées.

De plus, les fentes de serrage sont nécessairement absentes dans la région des ouvertures en forme de serrure qui constituent les premiers moyens d'accrochage. Il peut arriver que le périmètre de l'objet à serrer soit tel que, lors du serrage du collier, la vis se trouve précisément en regard de l'une de ces ouvertures. Dans ce cas, il est impossible de serrer le collier.

La présente invention vise à remédier à ces inconvénients.

Ainsi, l'invention s'applique à une bande de serrage pour un collier de serrage comprenant une portion de bande de métal enroulée sur elle-même, une vis de serrage et un support pour cette vis solidaire d'une première extrémité de la portion de bande, cette dernière présentant des surfaces d'appui, situées au moins au voisinage de sa deuxième extrémité et aptes à coopérer avec la vis pour serrer le collier, la bande présentant des zones de faiblesse selon lesquelles elle est apte à être rompue manuellement, ces zones de faiblesse étant régulièrement réparties sur la longueur de la bande, cette dernière présentant, en outre, des premiers moyens d'accrochage, situés au voisinage de chacune des zones de faiblesse et aptes à coopérer avec des deuxièmes moyens d'accrochage appartenant à un support d'une vis de serrage.

Le but de l'invention est atteint, selon les caractéristiques de la revendication 1.

Grâce à ces dispositions, la présence des premiers moyens d'accrochage ne nuit pas au serrage du collier, puisque la vis peut venir en prise avec les surfaces d'appui même dans la région de ces premiers moyens d'accrochage. De plus, les fenêtres qui forment les zones de faiblesse ont des dimensions telles que leur réalisation ne crée pas de trop petits déchets.

Ce premier mode de réalisation est particulièrement intéressant lorsque les surfaces d'appui sont constituées par des fentes de serrage pratiquées dans la bande, auquel cas les fenêtres formant les zones de faiblesse sont avantageusement constituées par des fentes de serrage particulières qui présentent une longueur, mesurée transversalement à la bande, supérieure à la longueur des autres fentes de serrage.

Le but de l'invention est également atteint, selon un deuxième mode de réalisation de l'invention, grâce au fait que les surfaces d'appui sont disposées sans interruption sur toute la longueur de la bande et s'étendent dans une région médiane de cette dernière, région de part et d'autre de laquelle sont ménagées des marges longitudinales dépourvues de ces surfaces d'appui, au fait que les premiers moyens d'accrochage sont réalisés dans lesdites marges longitudinales et au fait que les zones de faiblesse sont formées par des rainures s'étendant sensiblement transversalement par rapport à la bande et diminuant localement l'épaisseur de cette dernière.

Grâce à ces dispositions, les zones de faiblesse peuvent être réalisées sans générer de déchets, par estampage ou poinçonnage non traversant de la bande. De plus, les premiers moyens d'accrochage peuvent être réalisés comme dans le premier mode de réalisation.

Ce deuxième mode de réalisation trouve une application particulière au cas où les surfaces d'appui sont formées par des reliefs formant une crémaillère sur l'une des faces de la bande. Dans ce cas, les rainures formant les zones de faiblesse sont avantageusement réalisées sur l'autre face de la bande.

Il faut noter que, en particulier dans le cas d'une bande ajourée, dont les surfaces d'appui sont formées par des fentes de serrage, chaque zone de faiblesse peut comprendre une fenêtre (éventuellement formée par une fente de serrage), qui diminue localement la quantité de matière de la bande, combinée à une rainure qui diminue l'épaisseur de la quantité de matière restante.

Avantageusement, les zones de faiblesse sont disposées de telle sorte que la distance entre deux zones de faiblesse consécutives est sensiblement égale à un multiple du nombre π qui désigne le rapport constant du périmètre d'un cercle à son diamètre. Ainsi, l'utilisateur connaissant le diamètre de l'objet à serrer peut, sans utiliser aucun instrument de mesure, simplement compter le nombre de zones de faiblesse pour choisir la longueur de bande qui lui est nécessaire et découper la portion de bande au bon endroit.

Avantageusement, dans l'un ou l'autre mode de réalisation, les premiers moyens d'accrochage comprennent deux encoches latérales ménagées dans les marges longitudinales de la bande, lesdites encoches ménageant, sur les bords de la bande, des surfaces d'accrochage pour des crochets équipant un support pour une vis.

Une bande métallique conforme à l'invention peut être utilisée pour réaliser des colliers de serrage en accrochant, sur les moyens d'accrochage que comportent des portions de bande sectionnées à la longueur choisie, des supports qui contiennent une vis et dont les différents éléments constitutifs sont déjà assemblés.

L'invention sera bien comprise et ses avantages apparaîtront mieux à la lecture de la description détaillée qui suit, de modes de réalisation représentés à titre d'exemples non limitatifs. La description se réfère aux dessins annexés, sur lesquels :
- la Figure 1 est une vue partielle en élévation latérale d'un collier utilisant une bande conforme à l'invention,
- les Figures 2 et 3 sont des vues partielles de dessus d'une bande conforme au premier mode de réalisation de l'invention, selon deux variantes,
- la Figure 4 est une vue selon la flèche IV de la Figure 3,
- la Figure 5 est une vue de dessus de la partie d'extrémité d'un collier réalisé à partir d'une bande conforme à l'invention qui porte le support de la vis,
- la Figure 6 est une coupe selon la ligne VI-VI de la Figure 5,
- la Figure 7 est une vue analogue à la figure 5 montrant une variante,
- la Figure 8 est une vue partielle de dessus d'une bande conforme au deuxième mode de réalisation de l'invention et
- la Figure 9 est une section selon la ligne IX de la Figure 8.

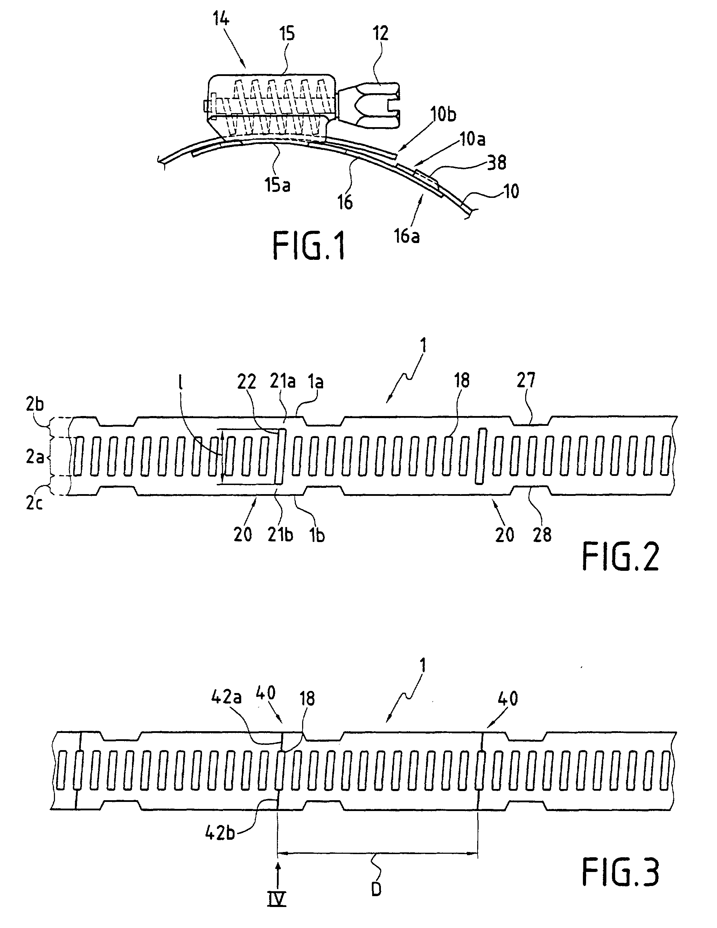

Le collier de la Figure 1 comporte une portion de bande de métal 10 enroulée sur elle-même, dont seules les parties d'extrémités 10a et 10b sont représentées. Le collier comporte une vis de serrage 12 disposée dans un support 14 qui lui-même comporte une semelle 16 fixée à la première extrémité 10a de la portion de bande 10.

Pour serrer le collier, on insère la deuxième extrémité 10b de la portion de bande 10 dans le support 14 et sous la vis 12 dans la position représentée sur la Figure 1. La portion de bande présente des surfaces d'appui qui sont disposées de manière à pouvoir coopérer avec les filets de la vis 12.

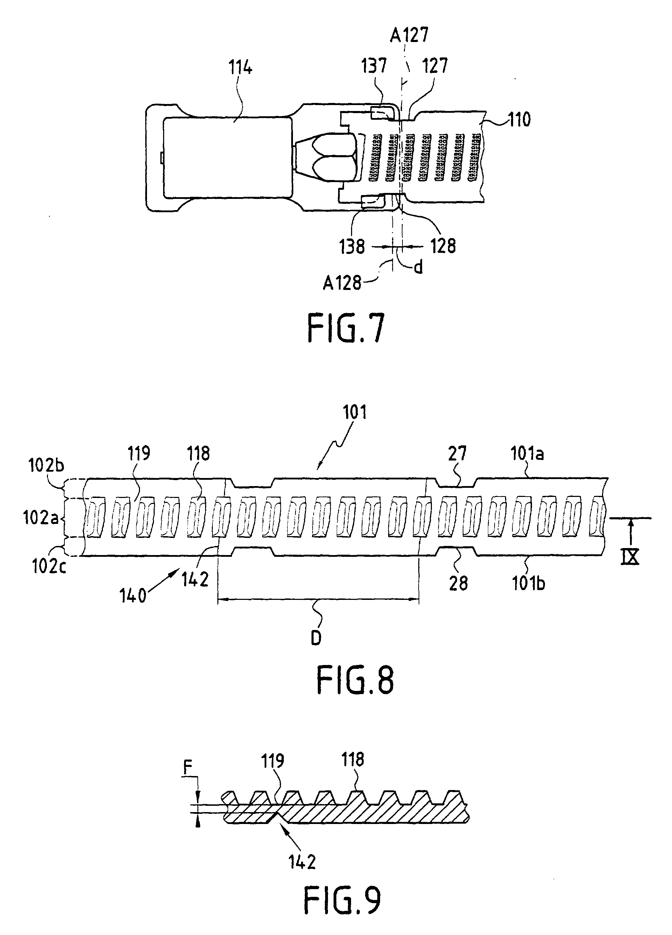

Sur les Figures 2 et 3, ces surfaces d'appui sont constituées par des fentes 18 pratiquées dans la bande, dont l'espacement correspond au pas des filets de la vis, ces fentes étant sensiblement transversales, tout en étant légèrement inclinées par rapport à la direction transversale à la bande pour être parallèles aux filets de la vis. Sur la Figure 8, les surfaces d'appui sont constituées par des reliefs qui forment une crémaillère (avec des parties saillantes 118 et des parties en creux 119) et qui sont orientés sensiblement transversalement tout en étant légèrement inclinés par rapport à la direction transversale à la bande pour être parallèles aux filets de la vis.

Les surfaces d'appui s'étendent dans une région médiane 2a de la bande 1 des Figures 2 et 3 ou dans une région médiane 102a de la bande 101 de la Figure 8. De part et d'autre de cette région médiane subsistent des marges longitudinales 2b, 2c ou 102b, 102c qui sont dépourvues des surfaces d'appui.

La bande 1 ou 101 dans laquelle est coupée la portion de bande 10 servant à réaliser le collier présente des zones de faiblesse régulièrement réparties sur sa longueur. Ces zones de faiblesse peuvent être réalisées de différentes manières.

Ainsi, dans le premier mode de réalisation, représenté sur les Figures 2 à 4, chaque zone de faiblesse 20 comprend une fenêtre 22 qui s'étend sensiblement transversalement par rapport à la bande. La longueur l de cette fenêtre est choisie de telle sorte que seules d'étroites portions de bande 21a et 21b subsistent entre les extrémités de la fenêtre et les bords longitudinaux 1a et 1b de la bande 1. Ces portions 21a et 21b sont suffisamment étroites pour pouvoir être rompues à la main par l'utilisateur. Les fenêtres 22 qui servent à réaliser les zones de faiblesse sont en fait analogues aux fentes de serrage 18, à ceci près qu'elles présentent une longueur (mesurée transversalement à la bande) supérieure à celle de ces dernières ; en d'autres termes, les fenêtres 22 empiètent sur les marges longitudinales 2b et 2c de la bande 1. Les fenêtres 22 ne servent donc pas seulement à permettre la rupture de la bande mais jouent également le rôle de surfaces d'appui pour la vis. Elles sont donc légèrement inclinées comme les fentes 18.

Si, dans le premier mode de réalisation, on choisissait d'autres types de surfaces d'appui, par exemple constituées par des reliefs en crémaillère, les fenêtres 22 pourraient également être présentes, entre deux parties saillantes consécutives de ces reliefs, et être disposées sensiblement transversalement par rapport à la bande.

Pour des bandes de largeur courante, de l'ordre de 14 mm, dans lesquelles les fenêtres 18 servant à réaliser les surfaces d'appui laissent normalement subsister des marges longitudinales d'environ 3 mm de métal à chacune de leurs extrémités, les fenêtres 22 pourront être choisies de telle sorte que la largeur des portions 21a, 21b soit ramenée à une valeur sensiblement égale à seulement 1,5 mm. Le matériau choisi pour réaliser la bande peut être de l'acier du type couramment utilisé dans les colliers de serrage. Pour les applications courantes, l'épaisseur de la bande est de l'ordre de 0,6 à 0,8 mm.

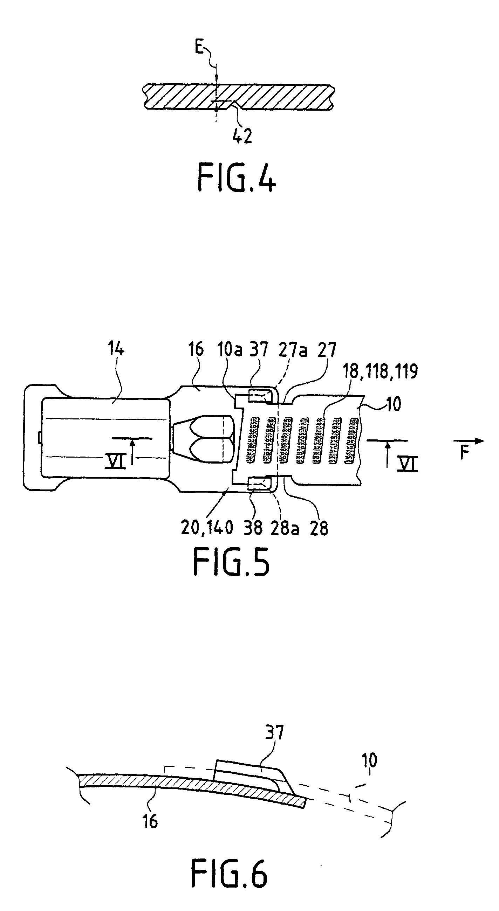

Dans la variante des Figures 3 et 4, chaque zone de faiblesse 40 comprend une rainure 42 qui s'étend sensiblement transversalement par rapport à la bande 1. On comprend que cette rainure diminue localement l'épaisseur de la bande et sa profondeur est telle que l'épaisseur E de matériau subsistant entre le fond de la rainure et la face opposée de la bande soit suffisamment faible pour que la bande puisse être rompue manuellement dans les zones 40. Par exemple, pour une bande d'épaisseur courante de l'ordre d'1 à 2 mm, la profondeur des rainures 42 pourra être comprise entre le tiers et la moitié de l'épaisseur de la bande.

La rainure 42 est alignée avec une fente de serrage 18 et se compose en fait de deux portions de rainures 42a et 42b situées chacune, dans l'axe de cette fente 18, entre une extrémité de la fente et le bord longitudinal adjacent de la bande.

Les Figures 8 et 9 montrent le deuxième mode de réalisation, pour lequel les zones de faiblesse 140 sont formées par des rainures 142 (signalées par des traits fins sur la Figure 8 et mieux visibles sur la Figure 9) qui s'étendent sensiblement transversalement par rapport à la bande et diminuent localement l'épaisseur de cette dernière. L'épaisseur F de matériau subsistant entre le fond des rainure 142 et la face opposée de la bande est suffisamment faible pour que la bande puisse être rompue manuellement dans les zones de faiblesse 140. Par exemple, pour une bande d'épaisseur courante de l'ordre d'1 à 2 mm, la profondeur des rainures 142 pourra être comprise entre le tiers et la moitié de l'épaisseur de la bande.

Les rainures 142 sont avantageusement utilisées pour former les zones de faiblesse d'une bande dont les surfaces d'appui sont réalisées par des reliefs en crémaillères, comme sur les Figures 8 et 9. En effet, dans ce cas, ni la réalisation des zones de faiblesse, ni celle des surfaces d'appui, ne seront la cause d'aucun déchet de fabrication.

Dans ce cas, on choisira avantageusement, comme le montre la Figure 9, de réaliser les rainures 142 de telle sorte qu'elles soient alignées avec parties en creux 119 des reliefs formant les surfaces d'appui. Ainsi, l'épaisseur de métal sera encore diminuée dans ces zones ; il pourra par exemple ne subsister qu'environ 1/5 à ¼ de l'épaisseur de la bande.

De plus, on choisira avantageusement de réaliser les rainures 142 sur la face "arrière" de la bande et non sur sa face "avant" qui est destinée à être tournée vers l'extérieur du collier et à coopérer avec la vis.

Les zones de faiblesse 20, 40 ou 140 des Figures 2 à 4, 8 et 9 sont régulièrement réparties sur la longueur de la bande.

De préférence, on choisira cet espacement de telle sorte que la distance D entre deux zones de faiblesse consécutives (indiquée sur les Figures 3 et 8) soit sensiblement égale à *n*.π mm, où *n* est un nombre entier au moins égal à 1.

Le nombre entier *n* est évidemment choisi de manière à éviter de prévoir un trop grand nombre de zones de faiblesse lorsque le matériau qui constitue la bande, sa largeur ou son épaisseur, font que cette dernière est plutôt destinée à des applications sur de relativement grands diamètres. Par exemple, lorsque la bande est destinée à être utilisée dans des colliers servant au serrage de gaines de ventilation sur des supports, gaines dont les diamètres peuvent varier mais peuvent globalement être considérés comme de relativement grands diamètres, on choisira *n* égal à 10 ou à 20. Ainsi, pour des applications à de relativement grands diamètres, *n* est un multiple de 10.

Grâce à ces dispositions, l'utilisateur de la bande connaissant le diamètre de l'objet à serrer, pourra très facilement déterminer quelle est la zone de faiblesse à laquelle il convient de rompre la bande en comptant le nombre de zones de faiblesse depuis l'extrémité libre de la bande et en connaissant le nombre *n*.

Pour la bande de l'invention, les surfaces d'appui (fentes 18 ou reliefs 118, 119) sont réalisées sur toute la longueur de la bande. En effet, dans l'un ou l'autre des modes de réalisation représentés, les premiers moyens d'accrochage qui permettent d'accrocher les portions de bande obtenues à partir de la bande 1 ou 101, ne sont pas la cause d'une interruption dans les surfaces d'appui. Ainsi, ces premiers moyens d'accrochage sont réalisés dans les marges longitudinales 2b, 2c ou 102b, 102c. De plus, les zones de faiblesse sont définies de manière à ne pas interrompre les surfaces d'appui. Ainsi, les fenêtres 22 sont étroites et peuvent même, lorsque les surfaces d'appui sont constituées par les fentes 18, faire partie de ces fentes.

Sur les Figures 2, 3 et 8, les premiers moyens d'accrochage comprennent deux encoches latérales 27 et 28 qui sont situées en vis-à-vis sur les deux bords 1a et 1b, respectivement 101a et 101b de la bande 1 ou 101. On comprend mieux le rôle de ces encoches 27 et 28 en considérant la Figure 5. On voit en effet sur cette Figure que le support 14 de la vis, plus précisément sa semelle 16, comprend des crochets 37 et 38 dans lesquels vient s'accrocher la portion de bande 10. Plus précisément, du côté le plus proche de la zone de faiblesse 20 ou 40 rompue pour former l'extrémité 10a de la portion de bande, les bords des encoches 27 et 28 forment des surfaces d'accrochage 27a et 28a qui peuvent être retenues dans les crochets 37 et 38.

Outre la semelle 16 qui est constituée par une plaquette, éventuellement légèrement courbe pour s'adapter à l'objet à serrer, le support 14 comprend un élément de support 15 (constitué sur les Figures 1 et 6 par un capot formant un boîtier) qui est fixé à la plaquette 16, par exemple par pliage de ses extrémités latérales 15a sous cette plaquette. La vis 12 est disposée dans le capot 15. Les crochets 37 et 38 sont ménagés dans la plaquette 15 au voisinage de son extrémité 16a qui est située du côté de la tête de la vis 12. C'est en effet évidemment de ce côté que doit venir s'accrocher l'extrémité 10a de la portion de bande.

Sur les Figures 5 et 6, les crochets 37 et 38 sont constitués par des crevés qui s'ouvrent vers la tête de la vis et vers l'intérieur de la plaquette 16. La longueur des crochets et leur écartement sont tels que, dans un premier temps, la portion de bande subsistant entre les encoches 27 et 28 puisse être placée entre les crochets. Il suffit ensuite de tirer la portion de bande par rapport au support dans le sens de la flèche F de la Figure 5 pour venir effectivement accrocher les surfaces d'accrochage 27a et 28a dans les crochets 37 et 38.

On notera que l'ensemble du support 14, avec la vis 12, est disponible à l'état assemblé. De plus, la plaquette 16 est suffisamment longue, et les crochets 37 et 38 disposés suffisamment à distance de l'élément de support 15, pour que l'extrémité 10a de la bande puisse être mise en place sans que l'on soit gêné par la tête de la vis ou par l'élément de support 15.

Dans la variante de la figure 7, la bande dans laquelle est réalisée la portion de bande 110 comporte des moyens pour déterminer le sens d'accrochage sur un support de vis.

Plus précisément, les premiers moyens d'accrochage, situés au voisinage de chaque zone de faiblesse, comportent deux encoches 127 et 128, analogues aux encoches 27 et 28 de la figure 5 à ceci près qu'elles sont décalées l'une par rapport à l'autre dans le sens longitudinal de la bande. On a indiqué par d ce décalage, repéré ici par la distance entre les axes médians transversaux respectifs, A 127 et A 128, des encoches.

Les crochets 137 et 138 sont analogues aux crochets 37 et 38 de la figure 5, à ceci près qu'ils présentent l'un par rapport à l'autre le même décalage que les encoches 127 et 128.

Ceci permet de faire en sorte qu'un seul sens d'accrochage de la portion de bande 110 sur le support 114 soit possible, qui correspond à celui pour lequel le décalage des encoches 127 et 128, et celui des crochets 137 et 138 sont dans le même sens.

Cette disposition présente un intérêt particulier lorsque, comme indiqué précédemment, les surfaces d'appui pour la vis (les fentes 18 ou les reliefs 118, 119) sont légèrement inclinées par rapport à la direction transversale à la bande. Elle assure en effet qu'il n'est possible d'accrocher la portion de bande sur le support que dans le sens dans lequel les surfaces d'appui sont orientées comme les filets de la vis et pas dans le sens contraire.

On évite ainsi toute fausse manoeuvre et toute perte de temps lors du montage.

Finalement, aucun outil n'est nécessaire pour assembler le collier puisqu'il suffit à l'utilisateur de sélectionner la zone de faiblesse à laquelle il convient de sectionner la portion de bande et de rompre cette dernière manuellement, avant de venir accrocher l'extrémité 10a, toujours manuellement, dans les crochets de la plaquette du support. La bande est sectionnée par un simple mouvement de pliage dans la zone de faiblesse choisie. Bien entendu, pour éviter toute rupture intempestive de la bande, les zones de faiblesse sont réalisées de telle sorte (longueur des fenêtres, profondeur des rainures) que l'angle de pliage nécessaire au sectionnement dans une zone de faiblesse, soit nettement supérieur à la courbure que présentera une portion de bande lorsqu'elle sera enroulée pour former un collier.

Il faut noter que les Figures 5 à 7 s'appliquent aux deux modes de réalisation de l'invention. Pour cette raison, on a seulement schématisé les surfaces d'appui pour la vis sur les figures 5 et 7, et on a repéré ces surfaces d'appui, ainsi que les zones de faiblesse, à la fois par les références des Figures 2 et 3 qui concernent le premier mode de réalisation et par celles de la Figure 8, qui concerne le deuxième mode de réalisation.

## Revendications

1. Bande métallique (1 ; 101) pour un collier de serrage comprenant une portion de bande de métal (10 ; 110) enroulée sur elle-même, une vis de serrage (12) et un support (14) pour cette vis solidaire d'une première extrémité (10a) de la portion de bande, cette dernière présentant des surfaces d'appui (18; 118, 119), situées au moins au voisinage de sa deuxième extrémité (10b) et aptes à coopérer avec la vis pour serrer le collier, la bande présentant des zones de faiblesse (20, 40 ; 140) selon lesquelles elle est apte à être rompue manuellement, ces zones de faiblesse étant régulièrement réparties sur la longueur de la bande, cette dernière présentant, en outre, des premiers moyens d'accrochage (27, 28 ; 127, 128), situés au voisinage de chacune des zones de faiblesse (20 ; 40 ; 140) et aptes à coopérer avec des deuxièmes moyens d'accrochage (37, 38) appartenant à un support (14) d'une vis de serrage,
**caractérisée en ce que** les surfaces d'appui (18 ; 118, 119) sont disposées sans interruption sur toute la longueur de la bande (1 ; 101) et s'étendent dans une région médiane (2a ; 102a) de cette dernière, région de part et d'autre de laquelle sont ménagées des marges longitudinales (2b, 2c ; 102b, 102c) dépourvues de ces surfaces d'appui, **en ce que** les premiers moyens d'accrochage (27, 28 ; 127, 128) sont réalisés dans lesdites marges longitudinales et **en ce que** les zones de faiblesse (20 ; 40 ; 140) s'étendent sensiblement transversalement par rapport à la bande.

2. Bande selon la revendication 1, **caractérisée en ce que** les zones de faiblesse (20) comprennent des fenêtres (22), chacune de ces fenêtres s'étendant au moins sur l'intégralité de la largeur, mesurée transversalement à la bande, de la portion médiane (2a) de la bande.

3. Bande selon la revendication 2, **caractérisée en ce que** les surfaces d'appui sont formées par des fentes de serrage (18) s'étendant sensiblement transversalement par rapport à la bande et **en ce que** les fenêtres (22) des zones de faiblesse font partie des fentes de serrage.

4. Bande selon la revendication 3, **caractérisée en ce que** les fenêtres (22) des zones de faiblesse sont formées par des fentes de serrage particulières qui présentent une longueur, mesurée transversalement par rapport à la bande, qui est supérieure à la longueur des autres fentes de serrage (18).

5. Bande selon l'une quelconque des revendications 1 à 4, **caractérisée en ce que** chaque zone de faiblesse (40) comprend une rainure (42) s'étendant sensiblement transversalement par rapport à la bande (1).

6. Bande selon la revendication 1, **caractérisée en ce que** les zones de faiblesse (140) sont formées par des rainures (142) qui diminuent localement l'épaisseur de cette dernière.

7. Bande selon la revendication 6, **caractérisée en ce que** les surfaces d'appui sont formées par des reliefs ayant des parties saillantes (118) et des parties en creux (119) situés sur une face de la bande, tandis que les rainures (142) formant les zones de faiblesse sont disposées sur l'autre face de la bande.

8. Bande selon la revendication 7, **caractérisée en ce que** les rainures (142) formant les zones de faiblesse sont situées sous des parties en creux (119) des reliefs.

9. Bande selon l'une quelconque des revendications 1 à 8, **caractérisée en ce que** la distance (D) entre deux zones de faiblesse (20, 40 ; 140) consécutives est sensiblement égale à *n.*π mm, où n est un nombre entier au moins égal à 1.

10. Bande selon l'une quelconque des revendications 1 à 9, **caractérisée en ce que** les premiers moyens d'accrochage comprennent deux encoches latérales (27, 28) situées sur les deux bords (1a, 1b, 101a, 101b) de la bande (1, 101), lesdites encoches ménageant des surfaces d'accrochage (27a, 28a) pour des crochets (37, 38) équipant un support.

11. Bande selon l'une quelconque des revendications 1 à 10, **caractérisée en ce qu'**elle comporte des moyens (127, 128) pour déterminer le sens d'accrochage sur un support.

12. Bande selon les revendications 10 et 11, **caractérisée en ce que** les deux encoches latérales (127, 128) des premiers moyens d'accrochage sont décalées l'une par rapport à l'autre dans le sens longitudinal de la bande.

13. Collier de serrage comprenant une portion de bande de métal (10 ; 110) enroulée sur elle-même, une vis de serrage (12) et un support (14) pour cette vis solidaire d'une première extrémité (10a) de la portion de bande, cette dernière présentant des surfaces d'appui (18), situées au moins au voisinage de sa deuxième extrémité (10b) et aptes à coopérer avec la vis pour serrer le collier,
**caractérisé en ce que** la portion de bande est réalisée dans une bande (1 ; 101) selon l'une quelconque des revendications 1 à 12.

14. Collier de serrage comprenant une portion de bande de métal (10 ; 110) enroulée sur elle-même, une vis de serrage (12) et un support (14) pour cette vis solidaire d'une première extrémité (10a) de la portion de bande, cette dernière présentant des surfaces d'appui (18), situées au moins au voisinage de sa deuxième extrémité (10b) et aptes à coopérer avec la vis pour serrer le collier,
**caractérisé en ce que** la portion de bande (10 ; 110) est réalisée dans une bande (1 ; 101) selon la revendication 10 et l'une quelconque des revendications 1 à 12 et **en ce que** le support (14) pour la vis comprend une plaquette (16) sur laquelle est fixé un élément de support (15) de ladite vis, la plaquette (16) présentant, au voisinage de celle (16a) de ses extrémités qui est située du côté de la tête de la vis (12), deux crochets (37, 38) aptes à coopérer avec les surfaces d'accrochage (27a, 28a) des deux encoches (27, 28 ; 127, 128) situées au voisinage de la première extrémité (10a) de la portion de bande (10).

15. Collier selon la revendication 14, **caractérisé en ce que** la portion de bande (110) est réalisée dans une bande (1 ; 101) selon la revendication 11 et **en ce que** les deux crochets (137, 138) présentent sensiblement le même décalage que les encoches latérales (127, 128) de la portion de bande (110).

## Claims

1. Metal band (1; 101) for a clamping collar comprising a portion of metal band (10; 110) wound on itself, a clamping screw (12) and a support (14) for this screw firmly attached to a first end (10a) of the portion of band, the latter having bearing surfaces (18; 118, 119), situated at least in the vicinity of its second end (10b) and able to co-operate with the screw to tighten the collar, the band having zones of weakness (20, 40; 140) at which it is able to be broken manually, these zones of weakness being regularly distributed along the length of the band, the latter having, in addition, first catching means (27, 28; 127, 128), situated in the vicinity of each of the zones of weakness (20; 40; 140) and able to co-operate with second catching means (37, 38) belonging to a support (14) of a clamping screw,
**characterised by** the fact that the bearing surfaces (18; 118, 119) are arranged without interruption over the whole length of the band (1; 101) and extend in a median region (2a; 102a) of the latter, on either side of which region are arranged longitudinal margins (2b, 2c; 102b, 102c) not having having these bearing surfaces, by the fact that the first catching means (27,28; 127, 128) are formed in the said longitudinal margins and by the fact that the zones of weakness (20; 40; 140) extend substantially transversally relative to the band.

2. Band as described in claim 1, **characterised by** the fact that the zones of weakness (20) comprise windows (22), each of these windows extending at least over the whole of the width, measured transversally to the band, of the median portion (2a) of the band.

3. Band as described in claim 2, **characterised by** the fact that the bearing surfaces are formed by clamping slots (18) extending substantially transversally relative to the band and by the fact that the windows (22) of the zones of weakness form part of the clamping slots.

4. Band as described in claim 3, **characterised by** the fact that the windows (22) of the zones of weakness are formed by particular clamping slots which have a length, measured transversally relative to the band, which is greater than the length of the other clamping slots (18).

5. Band as described in any one of claims 1 to 4, **characterised by** the fact that each zone of weakness (40) comprises a groove (42) extending substantially transversally relative to the band (1).

6. Band as described in claim 1, **characterised by** the fact that the zones of weakness (140) are formed by grooves (142) which locally reduce the thickness of this band.

7. Band as described in claim 6, **characterised by** the fact that the bearing surfaces are formed by reliefs having projecting parts (118) and recessed parts (119) situated on one face of the band, while the grooves (142) forming the zones of weakness are arranged on the other face of the band.

8. Band as described in claim 7, **characterised by** the fact that the grooves (142) forming the zones of weakness are situated under recessed parts (119) of the reliefs.

9. Band as described in any one of claims 1 to 8, **characterised by** the fact that the distance (D) between two consecutive zones of weakness (20, 40; 140) is substantially equal to *n*.π mm, where n is a whole number at least equal to 1.

10. Band as described in any one of claims 1 to 9, **characterised by** the fact that the first catching means comprise two lateral notches (27, 28) situated on the two edges (1a, 1b, 101a, 101b) of the band (1, 101), the said notches providing catching surfaces (27a, 28a) for hooks (37, 38) with which a support is provided.

11. Band as described in any one of claims 1 to 10, **characterised by** the fact that it includes means (127, 128) for determining the direction of catching on a support.

12. Band as described in claims 10 and 11, **characterised by** the fact that the two lateral notches (127, 128) of the first catching means are offset one relative to the other in the longitudinal direction of the band.

13. Clamping collar comprising a portion of metal band (10; 110) wound on itself, a clamping screw (12) and a support (14) for this screw firmly attached to a first end (10a) of the portion of band, the latter having bearing surfaces (18), situated at least in the vicinity of its second end (10b) and able to co-operate with the screw to tighten the collar,
**characterised by** the fact that the portion of band is formed in a band (1; 101) as described in any one of claims 1 to 12.

14. Clamping collar comprising a portion of metal band (10; 110) wound on itself, a clamping screw (12) and a support (14) for this screw firmly attached to a first end (10a) of the portion of band, the latter having bearing surfaces (18), situated at least in the vicinity of its second end (10b) and able to co-operate with the screw to tighten the collar,
**characterised by** the fact that the portion of band (10; 110) is formed in a band (1; 101) as described in claim 10 and any one of claims 1 to 12 and by the fact that the support (14) for the screw comprises a plate (16) on which is fixed an element for support (15) of the said screw, the plate (16) having, in the vicinity of that (16a) of its ends which is situated on the side of the head of the screw (12), two hooks (37, 38) able to cooperate with the catching surfaces (27a, 28a) of the two notches (27, 28; 127, 128) situated in the vicinity of the first end (10a) of the portion of band (10).

15. Collar as described in claim 14, **characterised by** the fact that the portion of band (110) is formed in a band (1; 101) as described in claim 11 and by the fact that the two hooks (137, 138) have substantially the same offset as the lateral notches (127, 128) of the portion of band (110).

## Patentansprüche

1. Metallband (1; 101) für eine Klemmschelle mit einem auf sich selbst aufgewickelten Metallbandteil (10; 110), einer Klemmschraube (12) und einem Träger (14) für diese Schraube, der mit einem ersten Ende (10a) des Bandteils verbunden ist, wobei letzterer Abstützoberflächen (18; 118, 119) aufweist, die zumindest in der Nähe seines zweiten Endes (10b) angeordnet sind und dazu geeignet sind, mit der Schraube zusammenzuwirken, um die Schelle zusammenzudrücken, wobei das Band Schwachbereiche (20, 40; 140) aufweist, auf Grund derer es dazu geeignet ist, von Hand auseinandergebrochen zu werden, wobei diese Schwachbereiche über die Länge des Bands regelmäßig verteilt sind, und wobei letzteres ferner erste Verhakungsmittel (27, 28; 127, 128) aufweist, welche in der Nähe jedes der Schwachbereiche (20; 40; 140) angeordnet sind und dazu geeignet sind, mit zweiten Verhakungsmitteln (37, 38), die zu einem Träger (14) einer Klemmschraube gehören, zusammenzuwirken,
**dadurch gekennzeichnet, dass** die Abstützoberflächen (18; 118, 119) ununterbrochen über die gesamte Länge des Bands (1; 101) hinweg angeordnet sind und sich in einem mittleren Bereich (2a; 102a) des letzteren erstrecken, wobei beiderseits von diesem Bereich Längsränder (2b, 2c; 102b, 102c) vorgesehen sind, die keine derartigen Abstützoberflächen aufweisen, dass die ersten Verhakungsmittel (27, 28; 127, 128) in den Längsrändern ausgebildet sind, und dass sich die Schwachbereiche (20; 40; 140) im Wesentlichen quer zum Band erstrecken.

2. Band nach Anspruch 1, **dadurch gekennzeichnet, dass** die Schwachbereiche (20) Fenster (22) umfassen, wobei sich jedes dieser Fenster zumindest über die gesamte Breite des mittleren Teils (2a) des Bands, gemessen quer zum Band, erstrecken.

3. Band nach Anspruch 2, **dadurch gekennzeichnet, dass** die Abstützoberflächen von Klemmspalten (18) gebildet sind, die sich im Wesentlichen quer zum Band erstrecken, und dass die Fenster (22) der Schwachbereiche Teil der Klemmspalten sind.

4. Band nach Anspruch 3, **dadurch gekennzeichnet, dass** die Fenster (22) der Schwachbereiche von besonderen Klemmspalten gebildet sind, welche eine quer zum Band gemessene Länge aufweisen, die größer als die Länge der anderen Klemmspalten (18) ist.

5. Band nach einem der Ansprüche 1-4, **dadurch gekennzeichnet, dass** jeder Schwachbereich (40) eine Nut (42) umfasst, welche sich im Wesentlichen quer zum Band (1) erstreckt.

6. Band nach Anspruch 1, **dadurch gekennzeichnet, dass** die Schwachbereiche (140) von Nuten (142) gebildet sind, die lokal die Dicke des Bands verringern.

7. Band nach Anspruch 6, **dadurch gekennzeichnet, dass** die Abstützoberflächen von Profilen gebildet sind, welche hervorstehende Teile (118) und Vertiefungsteile (119) aufweisen, die auf einer Oberfläche des Bands angeordnet sind, während die die Schwachbereiche bildenden Nuten (142) auf der anderen Fläche des Bands angeordnet sind.

8. Band nach Anspruch 7, **dadurch gekennzeichnet, dass** die die Schwachbereiche bildenden Nuten unter den Vertiefungsteilen (119) der Profile angeordnet sind.

9. Band nach einem Ansprüche 1-8, **dadurch gekennzeichnet, dass** der Abstand (D) zwischen zwei aufeinanderfolgenden Schwachbereichen (20, 40; 140) im Wesentlichen gleich n·π mm ist, wobei n eine ganze Zahl und mindestens gleich 1 ist.

10. Band nach einem der Ansprüche 1-9, **dadurch gekennzeichnet, dass** die ersten Verhakungsmittel zwei seitliche Kerben (27, 28) umfassen, die an den beiden Rändern (1a, 1b, 101a, 101b) des Bands (1, 101) angeordnet sind, wobei diese Kerben Verhakungsoberflächen (27a, 28a) für Haken (37, 38) bereitstellen, welche zu einem Träger gehören.

11. Band nach einem der Ansprüche 1-10, **dadurch gekennzeichnet, dass** es Mittel (127, 128) zum Festlegen der Verhakungsrichtung an einem Träger umfasst.

12. Band nach einem der Ansprüche 10 und 11, **dadurch gekennzeichnet, dass** die beiden seitlichen Kerben (127, 128) der ersten Verhakungsmittel in der Längsrichtung des Bands zueinander versetzt sind.

13. Klemmschelle mit einem Metallbandteil (10; 110), der auf sich selbst aufgewickelt ist, einer Klemmschraube (12) und einem Träger (14) für diese Schraube, der mit einem ersten Ende (10a) des Bandteils verbunden ist, wobei letzteres Abstützoberflächen (18) aufweist, die zumindest in der Nähe seines zweiten Endes (10b) angeordnet sind und dazu geeignet sind, mit der Schraube zusammenzuwirken, um die Schelle zusammenzudrücken,
**dadurch gekennzeichnet, dass** der Bandteil in einem Band (1; 101) gemäß einem der Ansprüche 1-12 ausgeführt ist.

14. Klemmschelle mit einem Metallbandteil (10; 110), der auf sich selbst aufgewickelt ist, einer Klemmschraube (12) und einem Träger (14) für diese Schraube, der mit einem ersten Ende (10a) des Bandteils verbunden ist, wobei letzteres Abstützoberflächen (18) aufweist, die zumindest in der Nähe seines zweiten Endes (10b) angeordnet sind und dazu geeignet sind, mit der Schraube zusammenzuwirken, um die Schelle zusammenzudrücken,
**dadurch gekennzeichnet, dass** der Bandteil (10; 110) in einem Band (1; 110) gemäß Anspruch 10 und einem der Ansprüche 1-12 ausgeführt ist, und dass der Träger (14) für die Schraube eine Scheibe (16) umfasst, auf der ein Trägerelement (15) für die Schraube befestigt ist, wobei die Scheibe (16) in der Nähe desjenigen (16a) ihrer Enden, welches neben dem Kopf der Schraube (12) angeordnet ist, zwei Haken (37, 38) aufweist, die dazu geeignet sind, mit den Verhakungsoberflächen (27a, 28a) der beiden Kerben (27, 28; 127, 128) zusammenzuwirken, die in der Nähe des ersten Endes (10a) des Bandteils (10) angeordnet sind.

15. Schelle nach Anspruch 14, **dadurch gekennzeichnet, dass** der Bandteil (110) in einem Band (1; 101) gemäß Anspruch 11 ausgeführt ist, und dass die beiden Haken (137, 138) im Wesentlichen dieselbe Versetzung wie die seitlichen Kerben (127, 128) des Bandteils (110) aufweisen.
